Europäisches Patentamt

European Patent Office

Office européen des brevets

(11) Publication number: 0 123 588
A2

# EUROPEAN PATENT APPLICATION

(21) Application number: 84400628.8

(22) Date of filing: 28.03.84

(51) Int. Cl.³: G 02 B 5/16

(30) Priority: 28.03.83 US 479779

(43) Date of publication of application:
31.10.84 Bulletin 84/44

(84) Designated Contracting States:
DE FR GB IT NL

(71) Applicant: Schlumberger Limited
277 Park Avenue
New York, N.Y. 10172(US)

(84) Designated Contracting States:
DE GB NL

(71) Applicant: SOCIETE DE PROSPECTION ELECTRIQUE
SCHLUMBERGER
42, rue Saint-Dominique
F-75340 Paris Cedex 07(FR)

(84) Designated Contracting States:
FR IT

(72) Inventor: Wagoner, Joseph L. C.
2810 Fairway Drive
Sugar Land Texas 77478(US)

(74) Representative: Chareyron, Lucien et al,
Schlumberger Limited Service Brevets c/o Giers, B.P. 121
12, place des Etats-Unis
F-92124 Montrouge Cedex(FR)

(54) Optical fiber cable construction.

(57) An optical fiber cable construction which minimizes microbending and macrobending losses by locating the fibers in a balanced and closely spaced geometric configuration proximate the cable center within a protective jacket having an annular configuration concentric with the fiber configuration and substantially occupying all space around the fibers, which jacket is formed from a material having a relatively high flexural modulus.

Fig. 1

## OPTICAL FIBER CABLE CONSTRUCTION

### Background of the Invention

This invention relates to a cable construction for optical fiber communication cables.

In the past few years there has been a significant effort expended attempting to develop optical fiber cables capable of efficiently transmitting optically encoded information. This is largely due to the potential ability of these optical cables to carry large amounts of information through a fiber which is substantially smaller and lighter than its electrical equivalent. The performance of these optical cables are however greatly subject to the application of exterior mechanical stress. This stress not only has the potential for destroying the optical fibers, but it can also degrade the optical transmission characteristics of the fibers. It is well known that even slight bending of the entire fiber (i.e. macrobending) or annular perturbations along the surface of the fiber (i.e. microbending) can introduce severe losses into the transmission characteristics for the fiber. A large amount of effort has therefore been expended in minimizing the amount of stress which is applied to the individual optical fibers within a fiber cable in order to minimize these losses.

For example, U.S. Patent 4,235,511 describes an optical fiber cable construction in which several structural compartments are formed within the cable to house the individual optical fibers. These compartments are substantially larger than the optical fibers placed therein to ensure a loosely fitting relationship between the fiber and the compartment. As stated in the abstract of the above-referenced patent, this "loose fitting of the optical fibers overcomes the increased transmission losses and changed transmission bandwidth caused by lateral or compression forces inherently applied to the optical fibers of conventional optical fiber cable constructions".

As an alternative to this compartment design, U.S. Patent 4,009,932 describes an optical fiber cable construction in which the fiber is located within an array of 3 or more metal filaments which are spaced from the optical fiber and disposed in planes intersecting with the axis of the fiber at substantially equal angles to the other. The optical fiber and the filaments surrounding the optical fiber are then embedded in a synthetic thermoplastic resin material. As is stated in column 2 beginning at line 27 "... in practice, the symmetrical arrangement of the three metallic filaments at planes arranged at $120^{\circ}$ to each other or of the four metallic filaments in orthogonal planes, provides in any stress plane, at least one filament resistant to tension and two filaments resistant to compression, or two resistant to tension and one to compression, such filaments having physical characteristics which enable them to oppose the stresses and prevent deformation of the optical fiber."

Neither of these constructions are without shortcomings. Compartmentalized cable results in a bulky over-sized cable which is inherently inflexible and therefore does not lend itself to easy manipulation. For many applications of optical fiber cables, this limitation is severe. Housing the optical fiber in an encapsulated matrix of discrete strength members provides a cable that is more easily manipulated, but one in which further stresses can be introduced and focused by the mere presence of the discrete strength members themselves. As is apparent from the description of this structure quoted above, a strength member in compression may be directly opposite a strength member in tension. These competing forces in the plane between the two strength members can introduce additional stresses within the encapsulating matrix that are ultimately directed upon the optical fiber contained therein.

### Summary of the Present Invention

In view of the aforementioned shortcomings within the optical fiber cable constructions described above, the optical fiber cable of the present invention has been designed in an effort to minimize any unequal stress being transmitted to the optical fiber, and in an effort to provide a cable construction which is readily manipulated such that the optical fiber cable can be used with sheaves and pulleys as is required by many of the applications for which such cables are best suited.

Accordingly, one aspect of the present invention is directed to a communications cable comprising optical fiber means for transmitting optical signals therethrough, and characterized by a protective jacket surrounding, in substantially continuous contact with, and substantially concentric with said fiber means, said jacket being formed from an extrudable material having a relatively high flexural modulus of elasticity.

For added protection the protective jacket and the optical fibers encapsulated therein can be further encapsulated within cushioning means. The material forming the cushioning means is chosen such that the cushioning means are adequately soft and pliable to resiliently deform upon the application of lateral stress to the cable, thereby isolating the protective jacket encapsulated therein from such external stress. In the event that even further protection is required to protect the optical fibers from the elements making up the environment in which such a cable might be beneficially used, the cable can also be armored exterior to the cushioning means, with the cushioning means occupying the space between the armoring and the protective jacket.

As will be apparent from the detailed description which follows, this cable construction effectively tends to isolate the optical fibers from any of the unbalanced stresses which are applied on the cable.

## Brief Description of the Drawing

The present invention will be further described hereinafter with reference to the accompanying drawing wherein:

Figure 1 is a transverse sectional view of an optical fiber cable according to the present invention;

Figure 2 is a transverse sectional view of a second embodiment of the present invention.

## Detailed Description

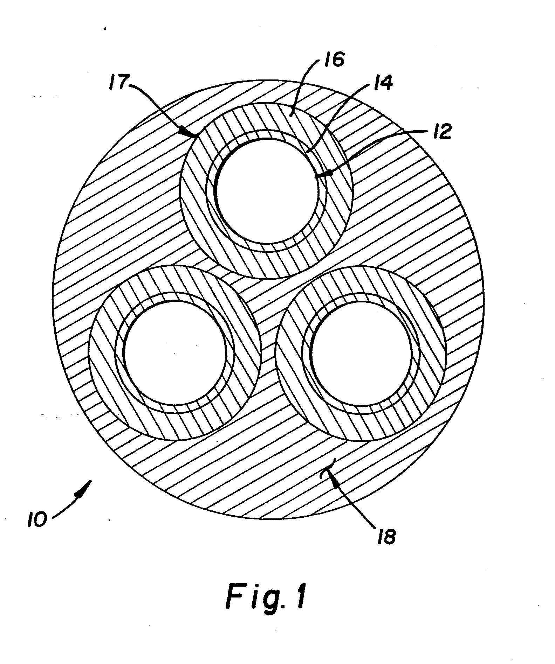

A communications cable 10, according to the present invention is illustrated in Figure 1. The cable 10 shown therein includes one or more optical fibers 12 which are designed for transmitting optical energy in the form of optically encoded information or signals therethrough. These optical fibers 12 are typical of those which are presently commercially available from a variety of sources.

During the fiber manufacturing process such fibers 12 are typically coated with a low modulus elastomer 14 such as RTV silicone, or the like, such that the low modulus elastomer 14 surrounds and is in substantially continuous contact with the exterior of the fiber 12. This low modulus elastomer 14 is sufficiently pliable to protect the fiber 12 from the introduction of stress due to contact by the fiber 12 with any surface imperfections within the fiber processing equipment or as a result of invading dust particles or other contaminants present within the manufacturing process. The low modulus elastomer 14 can be applied to the optical fiber 12 by a variety of means, such as pulling the fiber 12 through a pool of liquid RTV. The elastomer 14 is then typically cured by heating it with an in-line furnace. A thin protective layer 16 is then extruded around the fiber 12 and the low modulus elastomer 14, such that the protective layer 16 is in substantially continuous contact with the low modulus elastomer 14. This protective layer 16 provides longitudinal stiffness to the fiber 12, thereby tending to protect the fiber 12 from any bending stress which results from the remainder of the manufacturing process. The protective layer 16 is formed from a higher modulus material such as nylon, teflon, hytrel, or the like. The layer 16 and the low modulus material 14 are chosen to be chemically compatible, such that no interbonding or chemical degradation occurs as a result of their interaction. The fiber 12 with the low modulus material 14 and the protective layer 16 thereon is generally referred to as a buffered fiber 17. An example of such a buffered fiber 17 is as follows: an RTV silicone such as Dow Corning Sylgard 184 is applied to a fiber 12 having a typical outside diameter of 125 microns. The coated silicone fiber has a typical outer diameter of 250 microns. The RTV coated fiber is then further coated with a teflon PFA, such as that available from Dupont. The teflon coated fiber has a typical outer diameter of 500 microns.

Figure 1 shows three of these buffered fibers 17 oriented in a centrally located geometric configuration within the cable 10. The number of fibers 17 utilized is dependent upon the amount of information which needs to be transmitted through the cable 10 and in no way should the number of fibers shown in the figures or described

herein be considered a limitation on the present invention.

The cable 10 illustrated in Figure 1 also includes a protective jacket 18 which is extruded around the geometric configuration formed by the buffered fibers 17. This protective jacket 18 substantially occupies all the interstitial space between and around the individual buffered fibers 17. The material forming the protective jacket 18 is chosen to have a high flexural modulus of elasticity typically greater than $1 \times 10^5$ psi at $72^\circ F$. This value of modulus provides a stiffness to the cable 10 that further minimizes the stress applied to the buffered fibers 17 as a result of bending. In the preferred embodiment the protective jacket 18 is formed from a flurocarbon, known as Tefzel ETFE, which is commercially available from Dupont. The material forming the jacket 18 is chosen to have a melt temperature which does not damage or cause bonding with the outer buffer 16 of the fiber 12 during the extrusion process. Standard extruding techniques are used to incorporate the fibers 12 within the protective jacket 18. Care, however, is taken during the extrusion process to minimize the lay angle of the fibers 12 with respect to the longitudinal axis of the cable 10 in order to avoid transmission losses due to macrobending. This lay angle is less than $30^\circ$ and preferably very close to $0^\circ$. Care is also taken to ensure that the fibers 17 as encapsulated within the protective jacket 18 are in a balanced geometric configuration with respect to the axis of the cable 10. The buffered fibers 17 are also as close to the axis as is possible while still maintaining a separation between the buffered fibers 17 within the protective jacket 18.

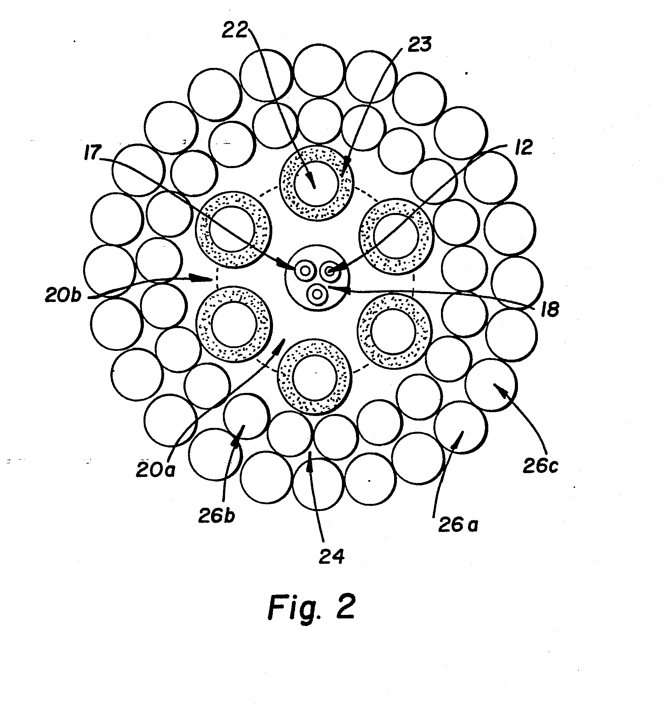

The cable 10 as thus far described offers substantial protection to the fibers 12 for a large percentage of the applications in which the cable 10 can be applied. It is however often desirable to add further protection to the cable 10 to allow the cables to operate under conditions of ever higher pressure and temperature. For example, cushioning means can be added around the protective jacket 18. The material forming the cushion means 20 (20a/20b Fig. 2) is chosen to be readily extrudable with standard extrusion techniques, and such that it is soft enough when cured to protect the buffered fiber 17 from laterally applied stress. As a typical example, the cushioning means can be formulated from neoprene. Neoprene also has the advantage that it can be formulated to be slightly semi-conductive. This is particularly important when the presence of electrical conductors 22 is desired within the cable in addition to the fiber optic means 17. Such conductors 22 are illustrated in Figure 2. In the preferred embodiment the conductors 22 are made of copper wire having a sufficient diameter for the current carrying capacity required by the particular application. The conductors 22 are typically insulated from the semi-conductive neoprene cushioning means 20 by a teflon outer insulation 23. In order to avoid a breaking or kinking of the conductors 22 as a result of varying tensile stress on the cable 10, the conductors are typically helically wound around the protective jacket 18. This wrapping of the conductors 22 is done with cable-making techniques such as are described in U.S. Patent 3,106,805.

Typically a first layer 20a of neoprene is extruded over the protective jacket 18 prior to wrapping the conductors 22 around the jacket 18. This layer 20a of neoprene protects the buffered fibers 17 from the application of lateral stress during the wrapping of the conductors 22. The neoprene layer 20a also partially extrudes between the various wraps of the conductors 22 as these conductors 22 are being wrapped around and forced into the neoprene layer 20a. Since neoprene can be made semi-conductive as has already been discussed, it provides electrical shielding between the conductors 22 and thus reduces the effect of conductor cross-talk. A second layer 20b of neoprene is then extruded over the conductors 22, and the cable 10 is then heat cured such that this outer layer 20b of neoprene reaches a hardness in the range of from 73 to 77 Shore A. The typical outer diameter of the outer neoprene layer 20b is approximately 0.75 cm. With this hardness and thickness the neoprene provides a further cushion for the fiber 12 from the application of lateral stress.

Finally it is often desirable to armor the cable 10. The armoring 24 not only adds to the breaking strength of the cable 10 but it provides further protection for the fiber 12 against lateral stress. The armoring 24 has an annular configuration in cross-section and typically comprises one or more strands 26a, b, c, etc. of a material having a breaking strain of less than 3%, which strands are formed into an annular helix (i.e., contrahelical armors or braids) surrounding the buffered fibers 17, protective material 18, and the cushioning means 20. The technique of forming these strands into a helix is similar to that set forth in U.S. Patent 3,106,805.

This configuration for the armoring 24 has the effect of translating any tensile stress applied on the cable 10 into radial compression of the annulus. This compression as well as the compression due to any other unbalanced radial forces is transferred to the high modulus protective jacket 18. Since the optical fibers 12 are centrally located proximate to the longitudinal axis of the cable 10 and in a geometrically balanced configuration within the high modulus protective jacket 18, the effect of these unbalanced radial forces is minimized. Since the protective jacket 18 also fills the voids and interstitial spaces within the cable 10, the cable 10 is made more incompressible thus further limiting the strain which is applied on the fibers 12 or the buffered fibers 17.

In the embodiment shown the armoring 24 includes two layers of strands. This is to provide some torque balance and to ensure that the armoring 24 substantially resists compression and thus further protects against any transmission losses due to macrobending or microbending. Typically the inner layer of such a dual layer armoring 24 is formed with an armor wire that has a slightly smaller diameter than the outer armor wire. This construction is again discussed in U.S. Patent 3,106,815.

Having thus described the present invention, it will be understood that changes may be made in the size, shape or configuration of some of the parts described herein without departing from the present invention as recited in the appended claims.

## Claims

1. A communications cable comprising

optical fiber means for transmitting optical signals therethrough, and characterized by

a protective jacket surrounding, in substantially continuous contact with, and substantially concentric with said fiber means, said jacket being formed from an extrudable material having a relatively high flexural modulus of elasticity.

2. A cable as in claim 1 characterized in that said material forming said protective jacket has a flexural modulus of elasticity of at least $1 \times 10^5$ psi at $72^\circ F$.

3. A communications cable as in claim 1 or claim 2 characterized in that said optical fiber means comprises one or more optical fibers each of which is buffered with a low modulus material surrounding and substantially in continuous contact with said fiber, and an outer layer surrounding and substantially in continuous contact with said low modulus material, said outer layer having a flexural modulus of elasticity greater than that of said low modulus material and less than or equal to that of said protective material.

4. A communications cable as in claim 3 characterized in that said one or more optical fibers comprises a plurality of fibers positioned in a substantially balanced and closely spaced geometric configuration that is substantially concentric with said cable, said fibers being located proximate to the longitudinal axis of said cable.

5. A communications cable as in claim 4 characterized in that each of said optical fibers has a lay angle relative to the longitudinal axis of said cable of less than 30 degrees.

6. A communications cable as in any one of the preceding claims further characterized by means for cushioning said fiber means surrounding and in substantially continuous contact with said protective jacket.

**0123588**

7. A communications cable as in claim 6 characterized in that said cushioning means comprises an extrudable material having a hardness when cured of less than 80 Shore A.

8. A communications cable as in claim 6 or claim 7 further characterized by conductor means for conveying electrical energy through the cable.

9. A communications cable as in claim 8 characterized in that said conductor means comprises a plurality of conductors located within said cushioning means in a balanced geometric configuration that is substantially concentric with said cable.

10. A communications cable as in claim 8 or claim 9 characterized in that said cushioning means comprises a first layer of an extrudable material in substantially continuous contact with said protective jacket and a second layer of an extrudable material adjacent said first layer, said second layer having a hardness after curing in the range of from 70 to 80 Shore A.

11. A communications cable as in claim 10 characterized in that said conductor means is positioned between said first and second layer of said cushioning means and embedded at least partially within said first layer of said cushioning means.

12. A communications cable as in claim 8 or claim 11 characterized in that at least a portion of said cushioning means is semi-conductive so as to afford an electrical shielding of said conductor means.

13. A communications cable as in any one of claims 6 - 12 further characterized by means for armoring said cable including one or more strands of a material having a breaking strain of less than 3%, which strands are substantially formed into a helix surrounding said cushioning means.

14. A communications cable as in claim 13 characterized in that the helical configuration formed by said armoring means is substantially incompressible.

Fig. 1

2/2

Fig. 2